# EUROPEAN PATENT SPECIFICATION

(11) **EP 3 795 822 B1**
(45) Date of publication and mention of the grant of the patent: **26.01.2022**
(21) Application number: 19198915.1
(22) Date of filing: 23.09.2019
(51) Int. Cl.: F03D 13/10, F03D 13/40, F03D 80/50, F03D 80/70, F16C 39/02, F16C 41/04

(54) **ROTOR HUB SUPPORTING TOOL, WIND POWER PLANT HEAD AND METHOD FOR SUPPORTING A ROTOR HUB OF A WIND DRIVEN POWER PLANT**
ROTORNABENSTÜTZWERKZEUG, WINDKRAFTANLAGENKOPF UND VERFAHREN ZUR UNTERSTÜTZUNG EINER ROTORNABE EINER WINDKRAFTANLAGE
OUTIL DE SUPPORT DE MOYEU DE ROTOR, TÊTE DE CENTRALE ÉOLIENNE ET PROCÉDÉ DE SUPPORT D'UN MOYEU DE ROTOR D'UNE CENTRALE ÉOLIENNE

(43) Date of publication of application: 24.03.2021
(73) Proprietor: Siemens Gamesa Renewable Energy Deutschland GmbH, 27572 Bremerhaven (DE)
(72) Inventor: Rogg, Andreas, 22607 Hamburg (DE)
(74) Representative: Aspacher, Karl-Georg

(56) References cited:
- EP-A1- 1 291 521
- EP-A1- 3 460 272
- EP-B1- 1 617 075
- WO-A1-2006/066686
- KR-B1- 101 571 304

## Description

### Field

The invention relates to a rotor hub supporting tool for a main shaft assembly and a rotor hub of a wind driven power plant. The invention relates further to a wind power plant head and a method for supporting a rotor hub of a wind driven power plant.

### Background

Wind is one of the most important renewable energy technologies. Wind turbines (also referred to as a wind driven power plants, wind turbine generators, or wind energy converters) are more and more arranged in large-scale offshore wind parks. There are many technical challenges relating to these offshore wind parks, as for example the assembly of parts and the transport, the erection of the wind turbine in the sea and the maintenance of the wind driven power plants.

Main bearings for wind turbines are designed to carry high loads while rotating. During the rotation of the shaft, which induces also a rotation of the rollers in the loaded zone, a portion of the lubricant (oil or grease) continuously gets into the contact zone between the roller and the bearing raceways, thereby separating the metal surfaces and providing low friction.

In case of long periods of standstill (no rotation) but with the presence of loads (e.g. the weight loads of the shaft and the rotor hub), the lubricant disappears from the contact zone between the roller and the raceway, thus creating a direct metal-to-metal contact. The absence of the lubricant and the metal-to-metal contact with the presence of load and/or vibrations and/or humidity can result in initial damage of the bearing due to fretting corrosion, contact corrosion or similar effects summarized as "standstill marks".

Such "standstill marks" may even be generated during storage or transport of the wind power plant head to the wind park.

To avoid this phenomenon, it is required to either eliminate the impact of the load, vibration and humidity or execute rotational movement at least frequently and with the lubricant present in the bearing.

It is known to execute a frequent or continuous turning of the drive train including the main shaft and the rotor hub (e.g. driven by using the generator as a motor with a special designed converter for this purpose). The disadvantages of this procedure is the necessity of the converter during storage and transport, as well as the supply of electricity which is very complicated especially in the transport case (which is the more demanding case in terms of the loads acting on the bearings as the weight load is superimposed with acceleration loads), and also the manpower to execute the task.

It is also known to extend the transport frame that is used to support and fix the rotor hub-nacelle assembly during storage and transport and include a structure (e.g. bars) that connect the hub directly with the transport frame, so that the main bearings are bypassed and the weight load is directly transferred to the transport frame. The disadvantage of this solution is the bigger size of the transport frame needed to additionally support the hub and also to withstand the transport loads. This creates a necessity to use a smaller frame during the nacelle assembly and then exchange the factory transport frame with the storage transport frame which requires a heavy crane and transport equipment. Prior art examples can be found in KR101571304B1 and EP3460272A1.

### Summary

It is an objective of the invention to provide a rotor hub supporting tool, a wind power plant head and an improved method for supporting a rotor hub of a wind driven power plant.

The invention provides a rotor hub supporting tool (supporting tool) for a main shaft assembly and a rotor hub of a wind driven power plant. The supporting tool comprises a carrier element for mounting the supporting tool to the main shaft assembly and a coupling element for mounting the supporting tool to the rotor hub. The supporting tool further comprises a fastening element for coupling the coupling element to the carrier element. The supporting tool is configured such that the distance of the coupling element to the carrier element in a radial direction of the rotational axis of the main shaft assembly can be adjusted by the fastening element. The rotor hub supporting tool is further configured such that an axial movement of coupling element relative to the carrier element in an axial direction of the rotational axis remains feasible when the coupling element is coupled to the carrier element by the fastening element. In this way, the supporting tool can be used as an interim mechanical support between the main shaft assembly and the rotor hub. The rotor hub can be lifted by the fastening element by decreasing the radial distance of the coupling element to the carrier element so that the weight load of the rotor hub directly rests on the main shaft assembly. Thus, the rotor hub can be supported by the supporting tool such that the main bearings of the main shaft assembly are substantially relieved from the weight load of the rotor hub. At the same time the rotor hub fixed to the coupling element remains movable in axial direction which prevents high tensile forces in the main bearings.

The supporting tool can further comprise a fixing element for coupling the coupling element to the carrier element. The supporting tool can be configured such that the distance of the coupling element to the carrier element in the axial direction can be adjusted by the fixing element.

The rotor hub supporting tool can ensure that a movement of the coupling element relative to the carrier element in a radial direction of the rotational axis remains feasible when the coupling element is coupled to the carrier element by the fixing element. In this way the rotor hub can be fixed in axial direction by the rotor hub supporting tool.

The coupling element can be mounted to a rotor locking disk which is mounted to the rotor hub.

The invention also provides a wind power plant head. The wind power plant head comprises a main shaft assembly comprises rotor hub and a rotor hub supporting tool according to the invention mounted to a main frame of the main shaft assembly.

The width of the supporting tool in horizontal and radial direction does not exceed the width of the main shaft assembly in horizontal and radial direction. "Horizontal" is defined in the erected state of the wind power plant.

The invention also provides a method for supporting a rotor hub of a wind driven power plant, wherein the rotor hub is mounted to a main shaft assembly comprising main bearings, with the step:
a) attaching the rotor hub supporting tool according to the invention to the rotor hub and the main shaft assembly,
b) raising the rotor hub relative to the main shaft assembly by the rotor hub supporting tool into a position in which the main bearings of the main shaft assembly are substantially relieved from the weight load of the rotor hub and in which an axial movement of the rotor hub in axial direction of the rotational axis of the main shaft assembly remains feasible.

In step b), the rotor hub can be moved in a radial direction.

The method can further comprise the step:
c) waiting for the rotor hub to settle in an equilibrium position in which the main bearings of the main shaft assembly are substantially relieved from the weight load of the rotor hub.

By waiting a few moments, for example at least 15 seconds, preferable at least 30 seconds, the main shaft and rotor hub have time to relax to the equilibrium position by shifting in axial direction. In the equilibrium position the tensile forces in the main bearings are so low that the assembly can be transported or stored without the main bearings being damaged.

The method can further comprise the step:
d) fixing the rotor hub in the equilibrium position by the rotor hub supporting tool.

The fixing element can be used to fix the rotor hub in step d).

The fastening element can be used to raise the rotor hub in step b).

Further aspects and characteristics of the invention will ensue from the following description of preferred embodiments of the invention with reference to the accompanying drawings, wherein
- FIG. 1 is a simplified perspective view of a wind power plant head comprising a main shaft assembly according to an embodiment of the invention and a rotor hub supporting tool according to an embodiment of the invention,
- FIG. 2 is a simplified sectional view of a wind power plant head of the embodiment of FIG. 1, and
- FIG. 3 is a detail view of the rotor hub supporting tool of the embodiment of FIG. 1.

### Detailed description of embodiments

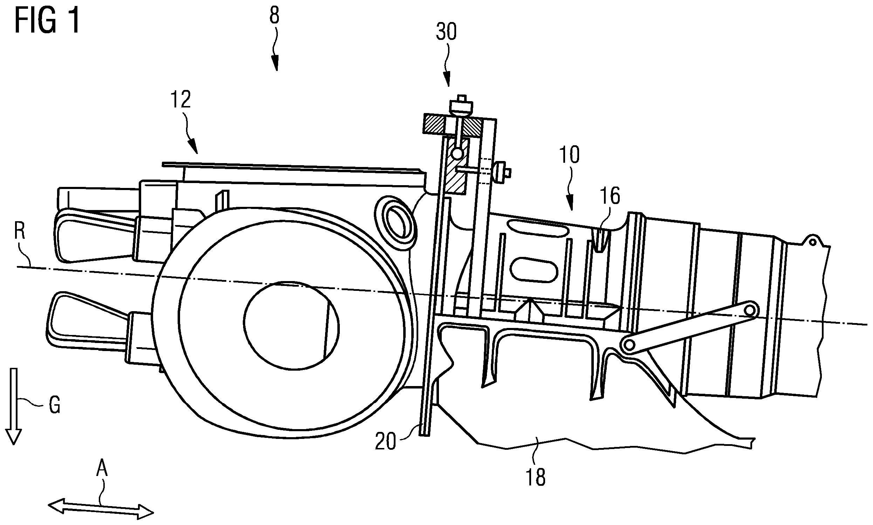

FIG. 1 shows a wind power plant head 8 comprising a main shaft assembly 10 and a rotor hub 12 as well as a supporting tool 30.

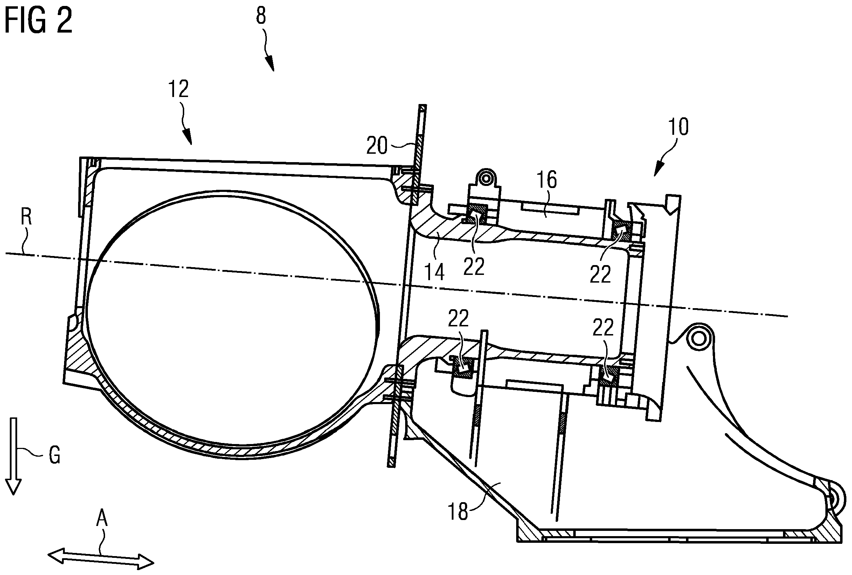

The main shaft assembly 10 comprises a main shaft 14 (see FIG. 2) having a rotational axial R, a main shaft housing 16 and a main frame 18.

The main shaft assembly 10 is part of a drive train which is mounted by means of the main frame 18 to a tower of the wind driven power plant.

The rotor hub 12 is mounted to the main shaft 14.

The rotor hub 12 is a cast part which is configured such that rotor blade roots can be mounted to the cast part in order to fix the rotor blades to the rotor hub 12.

The rotor hub 12 comprises a ring shaped rotor locking disk 20. The rotor locking disk 20 is rigidly mounted to the rotor hub 12 by means of a screwed connection. More precisely, the rotor locking disk 20 is mounted to an end face of the rotor hub 12 which is directed towards the main shaft 14 of the main shaft assembly 10. This means, that the rotor locking disk 20 is arranged between the rotor hub 12 and the main shaft housing 16.

The main shaft assembly 10 comprises main bearings 22 (see FIG. 2) with which the main shaft 14 is rotatably mounted around its rotational axis R inside the main shaft housing 16.

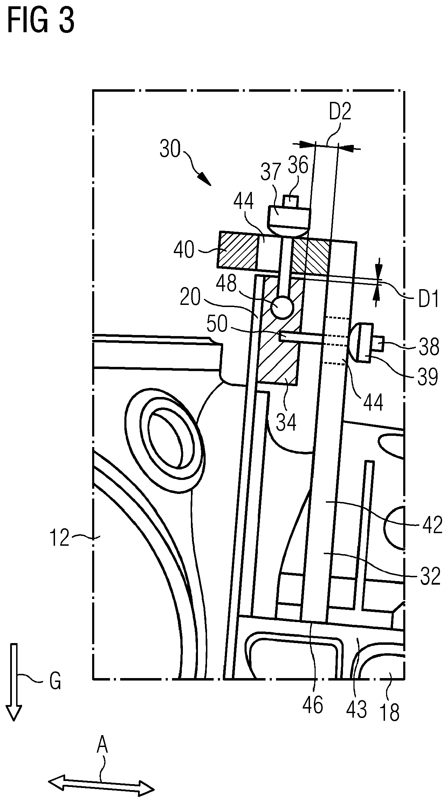

FIG. 3 shows the supporting tool 30 arranged between the locking disk 20 and the main shaft assembly 10 in a side view with some parts (hatched) shown in a sectional view. The supporting tool 30 comprises a carrier element 32, at least one coupling element 34, at least one fastening element 36 and at least one fixing element 38.

The plate-shaped carrier element 32 comprises a first section 40 and one or more second sections 42 and further has a U-shaped configuration with two pillars defined, e.g. by sections 42 attached to the upper face of the sideward protruding flanges 43 of main frame 18 and the first section 40 bridging the upper half of the main shaft assembly 10 and being attached to the first sections 42.

Alternatively, a single second section 42 can be arc-shaped. The first section 40 is attached to the arc.

The first section 40 and the second section 42 are perpendicular to each other in the side view of FIG. 3.

The first section 40 comprises a slotted hole 44 wherein the pin-like fastening element 36 is movably mounted in an axial direction A which is parallel to the rotational axis R.

The second section 42 comprises a slotted hole 44 wherein the pin-like fixing element 38 is movably mounted in and opposite to radial directions.

The supporting tool 30 is configured such that the lower ends 46 of the second section 42 contact the main frame 18 when the supporting tool 30 is mounted to the main shaft assembly 10 and the rotor hub 12, respectively.

The ends 46 of the second section 42 can comprise first mounting elements (not shown) that correspond to corresponding second mounting elements of the main frame 18.

In this way the supporting tool 30 can be mounted to already existing mounting elements of the main frame 18 or to mounting elements that are specifically designed for the supporting tool 30.

In an alternative embodiment according to the invention, the supporting tool 30 is mounted to the main shaft assembly 10, more particular to the main shaft housing 16.

The width of the supporting tool 30 in horizontal and radial direction (i.e. in direction of view) is equal or less than the width of the main shaft assembly 12 in this direction. The horizontal direction is defined by the erected state of the wind power plant. In this way the supporting tool 30 does not stick out of the sides of the main shaft assembly 12 which allows for compact transportation and/or storing.

The coupling element 34 is configured to be mounted to the rotor locking disk 20 and has a plate-shape.

The coupling element 34 can be mounted to already existing mounting elements of the rotor locking disk 20 or to mounting elements of rotor locking disk 20 that are specifically designed for the coupling element 34.

The fastening element 36 is configured to couple the coupling element 34 to the first section 40 of the carrier element 32 and can be a bolt or a bolt with a nut 37.

The fastening element 36 is further configured such that the distance D₁ of the coupling element 34 to the first section 40 of the carrier element 32 can be adjusted, e.g. by rotating the nut 37 relative to the bolt.

The fixing element 38 can be a bolt or a bolt with a nut 39 and is configured to couple the coupling element 34 to the second section 42 of the carrier element 32.

The fixing element 38 is further configured such that the distance D₂ of the coupling element 34 to the second section 42 of the carrier element 32 can be adjusted, e.g. by rotating the nut 39 relative to the bolt.

The coupling element 34 comprises a first seat 48 for mounting the fastening element 36. This first seat 48 may comprise a transverse through hole in the coupling element 34 into which a ball-shaped end of the bolt-like fastening element 36 is inserted in a direction perpendicular to the plane of projection of FIG. 3.

At its opposite end, the nut 37 is secured onto the bolt-like part of the fastening element 36 which nut 37 rests onto the upper side of the first section 40.

The coupling element 34 further comprises a second seat 50 for mounting the fixing element 38.

The second seat 50 can be designed as seat 48 or simply as a female thread.

The supporting tool 30 has a higher rigidity than the main bearings 22.

In a further embodiment, the supporting tool 30 does not comprise a fixing element 38. This means that in this case the supporting tool 30 is configured such that the main bearings 22 are substantially relieved from the weight load of the rotor hub 12 but the rotor hub 12 and the main shaft 10 are still movable in axial direction A.

The following steps are taken to prepare the main shaft assembly 10 and rotor hub 12 for long periods of standstill and even during transportation or storing to prevent the main shaft assembly 10 or the main bearings 22 from taking damage.

The supporting tool 30 is mounted to the main shaft assembly 10 by fixing the carrier element 32 to the main frame 18.

The supporting tool 30 is further mounted to the rotor hub 12 by fixing the coupling element 34 to the rotor locking disk 20.

The fastening element 36 is used to reduce the distance D₁ thereby raising the rotor hub 12 relative to the main shaft assembly 10 into a position in which the main bearings 22 of the main shaft assembly 10 are substantially relieved from the weight load of the rotor hub 12. Of course, more than one fastening element 36 can be provided between the coupling element 34 and the second section 40 in order to bear the weight of the rotor hub 12.

Due to the slotted hole 44 in the first section 40, the coupling element 34 and with it the rotor hub 12 and the main shaft 14 are still movably mounted in axial direction A.

The fixing element 38 is set to a mode that does not interfere with the axial movement of the coupling element 34.

Afterwards the rotor hub 12 is given time so that the main shaft assembly 10 can settle in an equilibrium position in which the main bearings 22 of the main shaft assembly 10 are substantially relieved from the weight load of the rotor hub 12.

In this way, the tensile forces in the main bearings 22 are reduced.

During this time the rotor hub 12 and the main shaft 14 will move in axial direction A which results in a specific distance D₂ between the coupling element 34 and the second section 42 for the equilibrium position.

In a following step, the rotor hub 12 is fixed in the equilibrium position by using the fixing element 38 to fix the coupling element 34 in distance D₂ to the second section 42.

In this way, the supporting tool 30 can be used as an interim mechanical support between the main frame 18 and the rotor locking disk 20 such that the weight load of the rotor hub 12 directly rests on the main frame 18. In this configuration the main bearings 22 are substantially relieved with respect to the weight load of the rotor hub. Thus damage to the main bearings 22 due to longer periods of standstill can be prevented.

Thus, no rotation of the main shaft 14 is required and a small transport frame without extensions can be used and the heavy lift operation to switch to a storage transport frame can be avoided.

## Claims

1. A rotor hub supporting tool (30) for a main shaft assembly (10) and a rotor hub (12) of a wind driven power plant, the supporting tool (30) comprising a carrier element (32) for mounting the supporting tool (30) to the main shaft assembly (10) and a coupling element (34) for mounting the supporting tool (30) to the rotor hub (12), wherein the supporting tool (30) further comprises a fastening element (36) for coupling the coupling element (34) to the carrier element (32), **characterized in that** the supporting tool (30) is configured such that the distance (D₁) of the coupling element (34) to the carrier element (32) in a radial direction of the rotational axis (R) of the main shaft assembly (10) can be adjusted by the fastening element (36), and wherein the rotor hub (12) supporting tool (30) is further configured such that an axial movement of coupling element (34) relative to the carrier element (32) in an axial direction (A) of the rotational axis (R) remains feasible when the coupling element (34) is coupled to the carrier element (32) by the fastening element (36) .

2. The rotor hub supporting tool according to claim 1, wherein the supporting tool (30) further comprises a fixing element (38) for coupling the coupling element (34) to the carrier element (32), wherein the supporting tool (30) is configured such that the distance (D₂) of the coupling element (34) to the carrier element (32) in the axial direction (A) can be adjusted by the fixing element (38), and wherein the rotor hub supporting tool (30) is further configured such that a movement of the coupling element (34) relative to the carrier element (32) in a radial direction of the rotational axis (R) remains feasible when the coupling element (34) is coupled to the carrier element (32) by the fixing element (38).

3. The rotor hub supporting tool according to claim 1 or 2, wherein a rotor locking disk (20) is mounted to the rotor hub (12), and wherein the coupling element (34) is mounted to the rotor locking disk (20).

4. Wind power plant head (8), comprising a main shaft assembly (10), a rotor hub (12) and a rotor hub supporting tool (30) according to anyone of claim 1 to 3 mounted to a main frame (18) of the main shaft assembly (10).

5. Wind power plant head according to claim 4, wherein the width of the supporting tool (30) in horizontal and radial direction does not exceed the width of the main shaft assembly (10) in horizontal and radial direction.

6. Method for supporting a rotor hub (12) of a wind driven power plant, wherein the rotor hub (12) is mounted to a main shaft assembly (10) comprising main bearings (22), comprising the step:
a) attaching the rotor hub supporting tool (30) according to anyone of claims 1 to 3 to the rotor hub (12) and the main shaft assembly (10),
b) raising the rotor hub (12) relative to the main shaft assembly (10) by the rotor hub supporting tool (30) into a position in which the main bearings (22) of the main shaft assembly (10) are substantially relieved from the weight load of the rotor hub (12) and in which an axial movement of the rotor hub (12) in axial direction (A) of the rotational axis (R) of the main shaft assembly (10) remains feasible.

7. Method according to claim 6, wherein the rotor hub (12) is moved in a radial direction in step b).

8. Method according to claim 6 or 7, further comprising the step:
c) waiting for the rotor hub (12) to settle in an equilibrium position in which the main bearings (22) of the main shaft assembly (10) are substantially relieved from the weight load of the rotor hub (12).

9. Method according to claim 8, further comprising the step:
d) fixing the rotor hub (12) in the equilibrium position by the rotor hub tool (30).

10. Method according to claim 9, wherein the fixing element (38) is used to fix the rotor hub (12) in step d).

11. Method according to anyone of claims 6 to 10, wherein the fastening element (36) is used to raise the rotor hub (12) in step b).

## Patentansprüche

1. Rotornabenhaltewerkzeug (30) für eine Hauptwellenbaugruppe (10) und eine Rotornabe (12) einer Windkraftanlage, wobei das Haltewerkzeug (30) ein Trägerelement (32) zum Anbringen des Haltewerkzeugs (30) an der Hauptwellenbaugruppe (10) und ein Verbindungselement (34) zum Anbringen des Haltewerkzeugs (30) an der Rotornabe (12) umfasst, wobei das Haltewerkzeug (30) ferner ein Befestigungselement (36) zum Verbinden des Verbindungselements (34) mit dem Trägerelement (32) umfasst, **dadurch gekennzeichnet, dass** das Haltewerkzeug (30) so konfiguriert ist, dass der Abstand (D1) vom Verbindungselement (34) zum Trägerelement (32) in radialer Richtung der Rotationsachse (R) der Hauptwellenbaugruppe (10) über das Befestigungselement (36) verstellt werden kann, und wobei das die Rotornabe (12) haltende Werkzeug (30) ferner so konfiguriert ist, dass eine axiale Bewegung des Verbindungselements (34) in Bezug zu dem Trägerelement (32) in axialer Richtung (A) der Rotationsachse (R) weiterhin möglich ist, wenn das Verbindungselement (34) über das Befestigungselement (36) mit dem Trägerelement (32) verbunden ist.

2. Rotornabenhaltewerkzeug nach Anspruch 1, wobei das Haltewerkzeug (30) ferner ein Fixierelement (38) zum Verbinden des Verbindungselements (34) mit dem Trägerelement (32) umfasst, wobei das Haltewerkzeug (30) so konfiguriert ist, dass der Abstand (D2) vom Verbindungselement (34) zum Trägerelement (32) in axialer Richtung (A) über das Fixierelement (38) verstellt werden kann, und wobei das Rotornabenhaltewerkzeug (30) ferner so konfiguriert ist, dass eine Bewegung des Verbindungselements (34) in Bezug zu dem Trägerelement (32) in radialer Richtung der Rotationsachse (R) weiterhin möglich ist, wenn das Verbindungselement (34) über das Fixierelement (38) mit dem Trägerelement (32) verbunden ist.

3. Rotornabenhaltewerkzeug nach Anspruch 1 oder 2, wobei eine Rotorarretierscheibe (20) an der Rotornabe (12) und das Verbindungselement (34) an der Rotorarretierscheibe (20) angebracht ist.

4. Windkraftanlagenkopf (8) mit einer Hauptwellenanordnung (10), einer Rotornabe (12) und einem am Grundrahmen (18) der Hauptwellenbaugruppe (10) angebrachten Rotornabenhaltewerkzeug (30) nach einem der Ansprüche 1 bis 3.

5. Windkraftanlagenkopf nach Anspruch 4, wobei die Breite des Haltewerkzeugs (30) in horizontaler und radialer Richtung die Breite der Hauptwellenbaugruppe (10) in horizontaler und radialer Richtung nicht überschreitet.

6. Verfahren zum Halten einer Rotornabe (12) einer Windkraftanlage, wobei die Rotornabe (12) an einer Hauptwellenbaugruppe (10) mit Hauptlagern (22) angebracht ist, mit folgenden Schritten:
a) Befestigen des Rotornabenhaltewerkzeugs (30) nach einem der Ansprüche 1 bis 3 an der Rotornabe (12) und der Hauptwellenbaugruppe (10),
b) Anheben der Rotornabe (12) in Bezug zu der Hauptwellenbaugruppe (10) über das Rotornabenhaltewerkzeug (30) in eine Position, in der die Hauptlager (22) der Hauptwellenbaugruppe (10) im Wesentlichen vom Gewicht der Rotornabe (12) entlastet sind und eine axiale Bewegung der Rotornabe (12) in axialer Richtung (A) der Rotationsachse (R) der Hauptwellenbaugruppe (10) weiterhin möglich ist.

7. Verfahren nach Anspruch 6, wobei die Rotornabe (12) in Schritt b) in radialer Richtung bewegt wird.

8. Verfahren nach Anspruch 6 oder 7, das ferner folgenden Schritt umfasst:
c) Warten, bis die Rotornabe (12) in einer Gleichgewichtslage zur Ruhe kommt, in der die Hauptlager (22) der Hauptwellenbaugruppe (10) im Wesentlichen vom Gewicht der Rotornabe (12) entlastet sind.

9. Verfahren nach Anspruch 8, das ferner folgenden Schritt umfasst:
d) Fixieren der Rotornabe (12) in der Gleichgewichtslage über das Rotornabenwerkzeug (30).

10. Verfahren nach Anspruch 9, wobei das Fixierelement (38) bei Schritt d) zum Fixieren der Rotornabe (12) benutzt wird.

11. Verfahren nach einem der Ansprüche 6 bis 10, wobei das Befestigungselement (36) bei Schritt b) zum Anheben der Rotornabe (12) benutzt wird.

## Revendications

1. Outil de support de moyeu de rotor (30) pour un ensemble arbre principal (10) et un moyeu de rotor (12) d'une centrale éolienne, l'outil de support (30) comprenant un élément porteur (32) pour monter l'outil de support (30) sur l'ensemble arbre principal (10) et un élément d'accouplement (34) pour monter l'outil de support (30) sur le moyeu de rotor (12), dans lequel l'outil de support (30) comprend en outre un élément d'attache (36) pour coupler l'élément d'accouplement (34) à l'élément porteur (32), **caractérisé en ce que**
l'outil de support (30) est configuré de sorte que la distance (D₁) entre l'élément d'accouplement (34) et l'élément porteur (32) dans une direction radiale de l'axe de rotation (R) de l'ensemble arbre principal (10) puisse être ajustée par l'élément d'attache (36) et dans lequel l'outil de support (30) du moyeu de rotor (12) est en outre configuré de sorte qu'un mouvement axial de l'élément d'accouplement (34) par rapport à l'élément porteur (32) dans une direction axiale (A) de l'axe de rotation (R) reste possible lorsque l'élément d'accouplement (34) est couplé à l'élément porteur (32) par l'élément d'attache (36) .

2. Outil de support de moyeu de rotor selon la revendication 1, dans lequel l'outil de support (30) comprend en outre un élément de fixation (38) pour coupler l'élément d'accouplement (34) à l'élément porteur (32), dans lequel l'outil de support (30) est configuré de sorte que la distance (D₂) entre l'élément d'accouplement (34) et l'élément porteur (32) dans la direction axiale (A) puisse être ajustée par l'élément de fixation (38), et dans lequel l'outil de support de moyeu de rotor (30) est en outre configuré de sorte qu'un mouvement de l'élément d'accouplement (34) par rapport à l'élément porteur (32) dans une direction radiale de l'axe de rotation (R) reste possible lorsque l'élément d'accouplement (34) est couplé à l'élément porteur (32) par l'élément de fixation (38).

3. Outil de support de moyeu de rotor selon la revendication 1 ou 2, dans lequel un disque de verrouillage de rotor (20) est monté sur le moyeu de rotor (12), et dans lequel l'élément d'accouplement (34) est monté sur le disque de verrouillage de rotor (20).

4. Tête de centrale éolienne (8), comprenant un ensemble arbre principal (10), un moyeu de rotor (12) et un outil de support de moyeu de rotor (30) selon l'une quelconque des revendications 1 à 3 monté sur un cadre principal (18) de l'ensemble arbre principal (10).

5. Tête de centrale éolienne selon la revendication 4, dans laquelle la largeur de l'outil de support (30) dans la direction horizontale et radiale ne dépasse pas la largeur de l'ensemble arbre principal (10) dans la direction horizontale et radiale.

6. Procédé de support d'un moyeu de rotor (12) d'une centrale éolienne, dans lequel le moyeu de rotor (12) est monté sur un ensemble arbre principal (10) comprenant des paliers principaux (22), comprenant les étapes :
a) attacher l'outil de support de moyeu de rotor (30) selon l'une quelconque des revendications 1 à 3 au moyeu de rotor (12) et à l'ensemble arbre principal (10),
b) soulever le moyeu de rotor (12) par rapport à l'ensemble arbre principal (10) par l'outil de support de moyeu de rotor (30) dans une position dans laquelle les paliers principaux (22) de l'ensemble arbre principal (10) sont sensiblement libérés de la charge de poids du moyeu de rotor (12) et dans laquelle un mouvement axial du moyeu de rotor (12) dans la direction axiale (A) de l'axe de rotation (R) de l'ensemble arbre principal (10) reste possible.

7. Procédé selon la revendication 6, dans lequel le moyeu de rotor (12) est déplacé dans une direction radiale à l'étape b).

8. Procédé selon la revendication 6 ou 7, comprenant en outre l'étape :
c) attendre que le moyeu de rotor (12) s'installe dans une position d'équilibre dans laquelle les paliers principaux (22) de l'ensemble arbre principal (10) sont sensiblement libérés de la charge de poids du moyeu de rotor (12).

9. Procédé selon la revendication 8, comprenant en outre l'étape :
d) fixer le moyeu de rotor (12) dans la position d'équilibre par l'outil de moyeu de rotor (30).

10. Procédé selon la revendication 9, dans lequel l'élément de fixation (38) est utilisé pour fixer le moyeu de rotor (12) à l'étape d).

11. Procédé selon l'une quelconque des revendications 6 à 10, dans lequel l'élément d'attache (36) est utilisé pour soulever le moyeu de rotor (12) à l'étape b).
